# EUROPÄISCHE PATENTANMELDUNG

(11) **EP 3 032 685 A1**
(43) Veröffentlichungstag der Anmeldung: **15.06.2016**
(21) Anmeldenummer: 15197585.1
(22) Anmeldetag: 21.09.2002
(51) Int. Cl.: H02J 3/38, F03D 9/00, F03D 7/02

(54) **VERFAHREN ZUM BETRIEB EINER WINDENERGIEANLAGE**

(30) Priorität: 28.09.2001 DE 10148225
(62) Teilanmeldung aus: 02774638.7
(71) Anmelder: Wobben Properties GmbH, 26607 Aurich (DE)
(72) Erfinder: Wobben, Aloys, 26607 Aurich (DE)
(74) Vertreter: Eisenführ Speiser

(57) **Zusammenfassung**

Windenergieanlagen wurden zunächst immer singulär aufgestellt und erst in den letzten Jahren werden - verursacht auch durch Verwaltungs- und Bauvorschriften - Windenergieanlagen häufig in Windparks installiert. Ein Windpark ist hierbei in seiner kleinsten Einheit eine Anordnung von wenigstens zwei Windenergieanlagen, häufig aber deutlich mehr. Beispielhaft sei der Windpark Holtriem (Ostfriesland) genannt, wo mehr als 50 Windenergieanlagen in einem Verbund aufgestellt sind. Es ist zu erwarten, dass die Stückzahl als auch die installierte Leistung der Windenergieanlagen auch in den weiteren Jahren noch stark ansteigen wird. In den meisten Fällen ist das Windpotential in Bereichen der Versorgungsnetze mit kleiner Kurzschlussleistung und geringer Bevölkerungsdichte am größten. Gerade dort werden die technischen Anschlussgrenzen durch die Windenergieanlagen rasch erreicht mit der Folge, dass an solchen Standorten dann keine weiteren Windenergieanlagen mehr aufgestellt werden können.

Verfahren zum Betrieb eines Windparks, bestehend aus mehreren Windenergieanlagen, wobei der Windpark an ein elektrisches Versorgungsnetz angeschlossen ist, in welches die von dem Windpark erzeugte elektrische Leistung eingespeist wird und der Windpark und/oder wenigstens eine der Windenergieanlagen des Windparks über einen Steuereingang verfügt, mittels dem die elektrische Leistung des Windparks bzw. einer oder mehrerer einzelner Windenergieanlage(n) in einem Bereich von 0 bis 100% der jeweiligen zur Verfügung zu stellenden Leistung, insbesondere der Nennleistung, eingestellt werden kann und dass eine Datenverarbeitungseinrichtung vorgesehen ist, welche mit dem Steuereingang verbunden ist und mittels welcher der Stellwert im Bereich von 0 bis 100% eingestellt wird, je nachdem wie groß die Leistung ist, die der gesamte Windpark an seinem Ausgang für die Einspeisung in das Energienetz zur Verfügung stellt und wobei der Betreiber (EVU) des elektrischen Versorgungsnetzes, an dem der Windpark angeschlossen ist, die vom Windpark abgegebene Leistung über den Steuereingang einstellen kann.

## Beschreibung

Die Erfindung betrifft ein Verfahren zum Betrieb eines Windparks sowie auch einen Windpark als solchen.

Windenergieanlagen wurden zunächst immer singulär aufgestellt und erst in den letzten Jahren werden - verursacht auch durch Verwaltungs- und Bauvorschriften - Windenergieanlagen häufig in Windparks installiert. Ein Windpark ist hierbei in seiner kleinsten Einheit eine Anordnung von wenigstens zwei Windenergieanlagen, häufig aber deutlich mehr. Beispielhaft sei der Windpark Holtriem (Ostfriesland) genannt, wo mehr als 50 Windenergieanlagen in einem Verbund aufgestellt sind. Es ist zu erwarten, dass die Stückzahl als auch die installierte Leistung der Windenergieanlagen auch in den weiteren Jahren noch stark ansteigen wird. In den meisten Fällen ist das Windpotential in Bereichen der Versorgungsnetze mit kleiner Kurzschlussleistung und geringer Bevölkerungsdichte am größten. Gerade dort werden die technischen Anschlussgrenzen durch die Windenergieanlagen rasch erreicht mit der Folge, dass an solchen Standorten dann keine weiteren Windenergieanlagen mehr aufgestellt werden können.

Ein konventioneller Windpark, der beispielsweise an ein Umspannwerk mit 50 MW angeschlossen wird, kann daher maximal nur 50 MW Gesamtleistung haben, d.h. z.B. 50 Windenergieanlagen mit jeweils 1 MW Nennleistung.

Eingedenk dessen, dass die Windenergieanlagen nicht ständig im Nennbetrieb betrieben werden und somit der gesamte Windpark auch nicht ständig seine maximale Leistung (Nennleistung) erreicht, kann man feststellen, dass der Windpark nicht optimal ausgenutzt wird, wenn die Nennleistung des Windparks der maximal möglichen einzuspeisenden Gesamtleistung entspricht.

Die Erfindung schlägt dem gemäß eine Lösung vor, bei der der Windpark mit einer Gesamtleistung ausgestattet wird, die höher ist als die maximal mögliche Netzeinspeiseleistung. Auf das vorgenannte Beispiel übertragen, kann die Leistung auf einen Wert von über 50 MW, z. B 53 MW angehoben werden. Sobald die Windgeschwindigkeiten hoch genug sind, um die Grenzleistung von 50 MW zu erzeugen, greift die erfindungsgemäße Windparkregelung ein und regelt einzelne oder alle Anlagen bei Überschreitung der Gesamt-Maximalleistung derart ab, dass diese immer eingehalten wird. Dies bedeutet, dass bei Windgeschwindigkeiten über Nennwind (Windgeschwindigkeit, bei der eine Windenergieanlage ihre Nennleistung erreicht) wenigstens eine oder alle Anlagen mit einer (leicht) gedrosselten Leistung betrieben werden (beispielsweise mit einer Leistung von 940 kW anstatt von 1 MW).

Die Vorteile der Erfindung liegen auf der Hand. Insgesamt können die Netzkomponenten des Einspeisenetzes (Netzkomponenten sind z. B der Transformator und die Leitungen) optimal ausgenutzt bzw. ausgelastet werden (es ist auch eine Ausnutzung bis zur thermischen Grenze möglich). Somit können vorhandene Windparkflächen besser ausgenutzt werden durch die Aufstellung einer maximal möglichen Anzahl von Windenergieanlagen. Die Anzahl ist dann nicht mehr (so stark) durch die vorhandene Netzwerkkapazität begrenzt.

Zur Steuerung/Regelung einer Windenergieanlage ist es zweckmäßig, wenn diese über einen Dateneingang verfügt, mittels/über den die elektrische Leistung in einem Bereich von 0 bis 100% (bezogen auf die Nennleistung) eingestellt werden kann. Wird an diesen Dateneingang z. B ein Sollwert von 350 kW angelegt, so wird die maximale Leistung dieser Windenergieanlage den Sollwert von 350 kW nicht überschreiten. Jeder Wert von 0 bis zur Nennleistung (z. B. von 0 bis 1 MW) ist als Sollwert möglich.

Dieser Dateneingang kann direkt zur Leistungsbegrenzung benutzt werden.

Es kann aber auch mit Hilfe eines Reglers die Generatorleistung in Abhängigkeit der Netzspannung (im Windparknetz oder im Einspeisenetz) geregelt werden.

Eine weitere wichtige Funktion wird im folgenden anhand einer Windparkregelung erläutert. Es sei beispielsweise angenommen, dass ein Windpark aus 10 Windenergieanlagen besteht, die jeweils über eine Nennleistung von 600 kW verfügen. Aufgrund der Kapazitäten der Netzkomponenten (Leitungskapazitäten) oder der begrenzten Kapazitäten im Umspannwerk sei ferner angenommen, dass die maximal abzugebende Leistung (Grenzleistung) auf 5200 kW begrenzt ist.

Es gibt nun die Möglichkeit, alle Windenergieanlagen auf eine Maximalleistung von 520 kW mit Hilfe des Sollwertes (Dateneingang) zu begrenzen. Damit ist die Forderung zur Begrenzung der abzugebenden Leistung stets erfüllt.

Eine andere Möglichkeit besteht darin, die maximale Leistung als Summe aller Anlagen nicht überschreiten zu lassen, gleichzeitig aber ein Maximum an Energie (kW-Stunden (Arbeit)) zu erzeugen.

Hierzu sollte man wissen, dass bei geringen bis mäßigen Windgeschwindigkeiten innerhalb des Windparks es häufig vorkommt, dass die Windenergieanlagen an den günstigen (guten) Standorten (das sind die Standorte, auf die der Wind innerhalb des Windparks zuerst trifft) viel Wind bekommen. Werden nun alle Windenergieanlagen gleichzeitig auf ihren gedrosselten Wert heruntergeregelt (z. B. alle auf 520 kW), wird diese erzeugte Leistung zwar von einigen an guten Standorten angeordneten Windenergieanlagen erreicht, einige andere Windenergieanlagen, die jedoch im "Windschatten" der gut lokalisierten Windenergieanlagen stehen (in der zweiten und dritten Reihe) haben weniger Wind und arbeiten dadurch z. B. nur mit 460 kW Leistung und erreichen nicht den Wert der maximal gedrosselten Leistung von 520 kW. Die erzeugte Gesamtleistung des Windparks liegt dem gemäß also wesentlich unterhalb der erlaubten Grenzleistung von 5200 kW.

Die erfindungsgemäße Windparkleistungsregelung regelt in diesem Fall die einzelnen Anlagen so, dass der maximal mögliche Energieertrag sich einstellt. Das bedeutet konkret, dass z. B die Anlagen in der ersten Reihe (also an guten Standorten) auf eine höhere Leistung, z. B. auf die Nennleistung geregelt werden (also keine Drosselung). Somit steigt die gesamte elektrische Leistung im Windpark an. Die Parkregelung regelt jedoch jede einzelne Anlage so, dass die maximal erlaubte elektrische Anschlussleistung nicht überschritten wird, während gleichzeitig die erzeugte Arbeit (kWh) einen maximalen Wert erreicht.

Das erfindungsgemäße Windparkmanagement lässt sich leicht an die jeweiligen sich einstellenden Situationen anpassen. So kann beispielsweise sehr einfach eine andere Drosselung der Leistung einzelner Anlagen vorgenommen werden, wenn eine einzelne oder mehrere Anlagen eines Windparks vom Netz genommen werden (müssen), sei aus Wartungsgründen oder aus anderen Gründen eine einzelne oder mehrere Anlagen vorübergehend stillgelegt werden müssen.

Zur Steuerung/Regelung des Windparks bzw. der einzelnen Anlagen kann eine Daten/Steuerungsverarbeitungseinrichtung verwendet werden, welche mit den Dateneingängen der Anlagen verbunden ist und aus den Windgeschwindigkeitsdaten, die (von jeder Anlage) ermittelt werden, den jeweils günstigsten Leistungsdrosselungswert für eine einzelne Anlage bzw. den gesamten Windpark ermittelt.

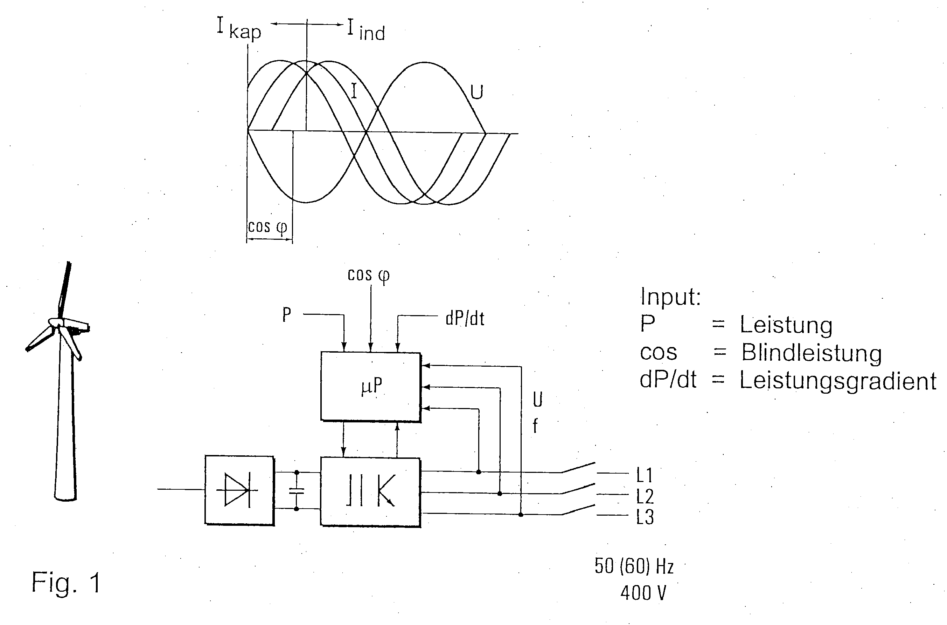

Die Figur 1 zeigt im Blockschaltbild die Steuerung einer Windenergieanlage mittels eines Mikroprozessors µP, welcher mit einer Wechselrichtereinrichtung (PWR) verbunden ist, mittels welchem mehrphasiger Wechselstrom in ein Versorgungsnetz eingespeist werden kann. Der Mikroprozessor verfügt über einen Leistungseingabeeingang P, einen Eingang zur Eingabe eines Leistungsfaktors (cos phi) sowie einen Eingang zur Eingabe des Leistungsgradienten (dP/dt).

Die Wechselrichtereinrichtung, bestehend aus einem Gleichrichter, einem Gleichstromzwischenkreis und einem Wechselrichter ist mit dem Generator einer Windenergieanlage verbunden und erhält von dieser die vom Generator erzeugte Energie drehzahlvariabel, d. h. in Unabhängigkeit der Drehzahl des Rotors der Windenergieanlage.

Die in der Figur dargestellte Konzeption dient zur Erläuterung, wie die von einer Windenergieanlage abgegebene Leistung in ihrem Betrag auf einen maximal möglichen Netzeinspeisewert begrenzt werden kann.

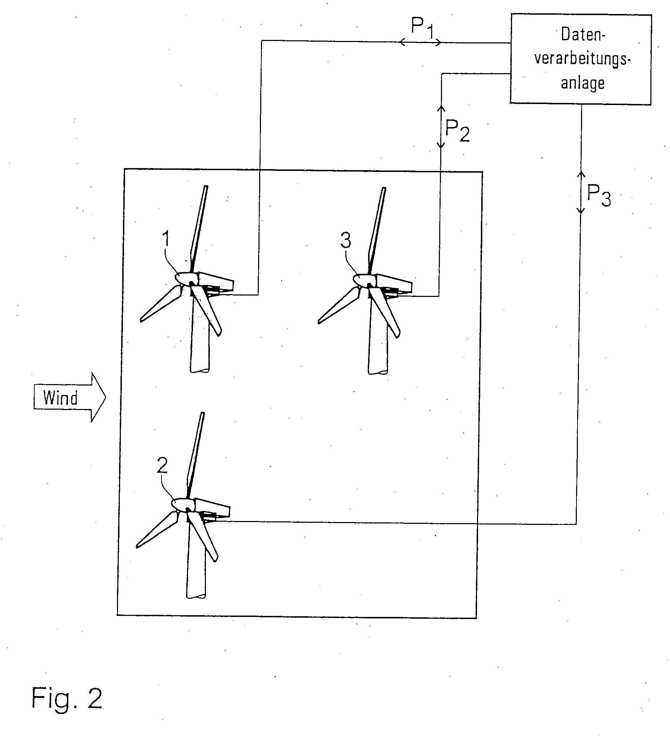

Die Figur 2 zeigt die Prinzipdarstellung eines Windparks, bestehend aus beispielhaft drei Windenergieanlagen 1, 2 und 3, von denen - aus der Windrichtung betrachtet - zwei nebeneinander stehen und die dritte hinter den ersten beiden platziert ist. Da jeder der einzelnen Windenergieanlagen über einen Leistungseingang zur Einstellung der Leistung der jeweiligen Anlage verfügt (Fig. 1), kann mittels einer Datenverarbeitungseinrichtung mittels der der gesamte Windpark gesteuert wird jeweils die Leistungen einer einzelnen Windenergieanlage auf einen gewünschten Wert eingestellt werden. In der Figur 2 sind die günstigen Standorte der Windenergieanlagen diejenigen, auf die der Wind zuerst trifft, also die Anlage 1 und 2.

Die vorliegende Erfindung betrifft auch ein Verfahren zum Betreiben eines Windparks mit wenigstens einer Windenergieanlage mit einem von einem Rotor antreibbaren elektrischen Generator zum Abgeben elektrischer Leistung an ein elektrisches Netz, dem die Windenergieanlage angeschlossen ist. Die Erfindung betrifft ferner eine Windenergieanlage mit einem Rotor und einem mit dem Rotor gekoppelten elektrischen Generator zum Abgeben elektrischer Leistung an einen elektrischen Verbraucher, insbesondere ein elektrisches Netz.

Bei schwachen elektrischen (Insel-)Netzen steigt die Netzfrequenz sehr schnell (schlagartig) an, wenn ein größerer Verbraucher vom elektrischen Netz getrennt wird. Die Antriebsmaschinen, wie z. B. Dieselmotoren, Wasserräder usw. benötigen einige Zeit, um dann ihre (mechanische und elektrische) Leistung zu reduzieren. Während dieser Zeit erzeugen diese Generatoren mehr Energie als vom elektrischen Netz entnommen wird. Diese Energie wird dann für die Beschleunigung der Generatoren verbraucht. Damit steigt die Drehzahl und somit auch die Netzfrequenz an.

Da viele elektrische Geräte, z. B. Computer, Elektromotoren und dergleichen, die an das elektrische Netz angeschlossen sind, jedoch nicht auf schwankende Netzfrequenzen bzw. deren schlagartige Änderungen ausgelegt sind, kann dieses zu Schäden an elektrischen Maschinen bis zur Zerstörung dieser Maschinen führen.

Der Erfindung liegt die Aufgabe zu Grunde, die vorbeschriebenen Probleme zu beseitigen, wenn Windenergieanlagen (ein Windpark) an dem elektrischen Netz angeschlossen sind.

Erfindungsgemäß wird diese Lösung durch ein Verfahren mit den Merkmalen nach Anspruch 7 sowie eine Windenergieanlage mit dem Merkmal nach Anspruch 10 gelöst. Vorteilhafte Weiterbildungen sind in den Unteransprüchen entsprechend beschrieben.

Erfindungsgemäß wird vorgeschlagen, falls Windenergieanlagen an solchen schwachen Netzen betrieben werden, deren (mechanische und) elektrische Leistung in Abhängigkeit der steigenden Netzfrequenz zu steuern. Damit soll ein weiterer Anstieg der Netzfrequenz verhindert werden bzw. eine Reduktion der Netzfrequenz erreicht werden.

Dieser Erfindungsaspekt ist nachfolgend an Hand eines Ausführungsbeispiels näher erläutert:

Es zeigen:
- Fig. 11: ein Frequenz-/Leistungszeitdiagramm einer Windenergieanlage,
- Fig. 12: Seitenansicht einer Windenergieanlage,
- Fig. 13: ein Blockschaltdiagramm eines mit einem Mikroprozessor gesteuerten Wechselrichters einer Windenergieanlage,
- Fig. 14: Darstellung einer Regelungseinrichtung einer Windkraftanlage,
- Fig. 15: Darstellung einer Ankopplung einer Windenergieanlage an ein elektrisches Netz,
- Fig. 16: Alternativdarstellung zu Fig. 13.

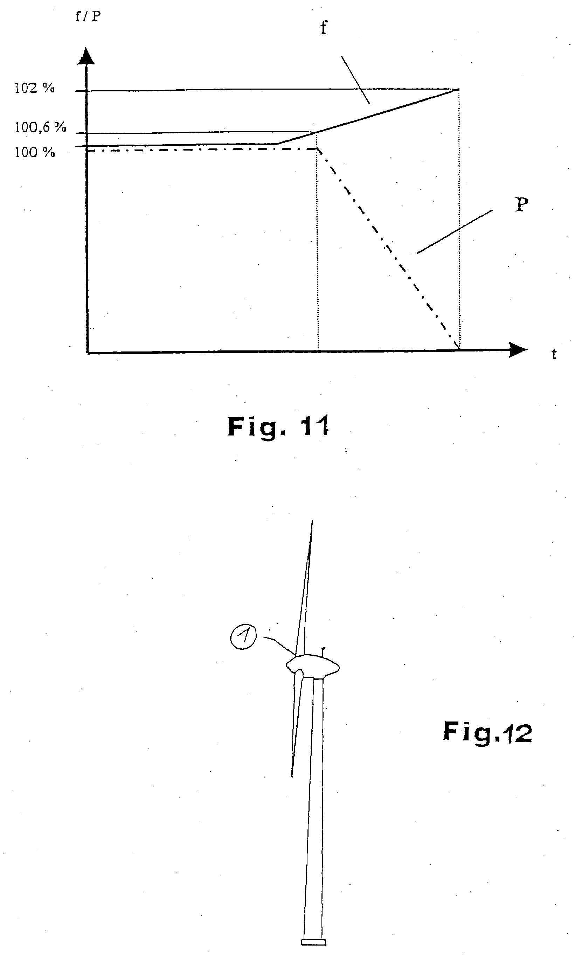

Fig. 11 zeigt die Anforderung an eine Windenergieanlage (eines Windparks), ihre Ausgangsleistung P in Abhängigkeit der elektrischen Frequenz f des Netzes zu reduzieren. Der Wert von 100 % stellt dabei die Sollfrequenz (50 Hz, 60 Hz) des elektrischen Netzes dar. Die Werte 100,6 % bzw. 102 % sind entsprechend höhere Werte der Netzfrequenz f.

Die elektrische Leistung der Windenergieanlage (des Windparks) wird z.B. bei einem Anstieg der Netzfrequenz um 0,6 % (also auf 100,6 %) noch nicht heruntergeregelt. Steigt danach die Netzfrequenz noch weiter an, wird die elektrische Leistung der Windenergieanlage heruntergeregelt. Im gezeigten Beispiel wird die elektrische Leistung der Windenergieanlage bei einem Anstieg der Netzfrequenz auf 102 % auf Null Leistung heruntergeregelt.

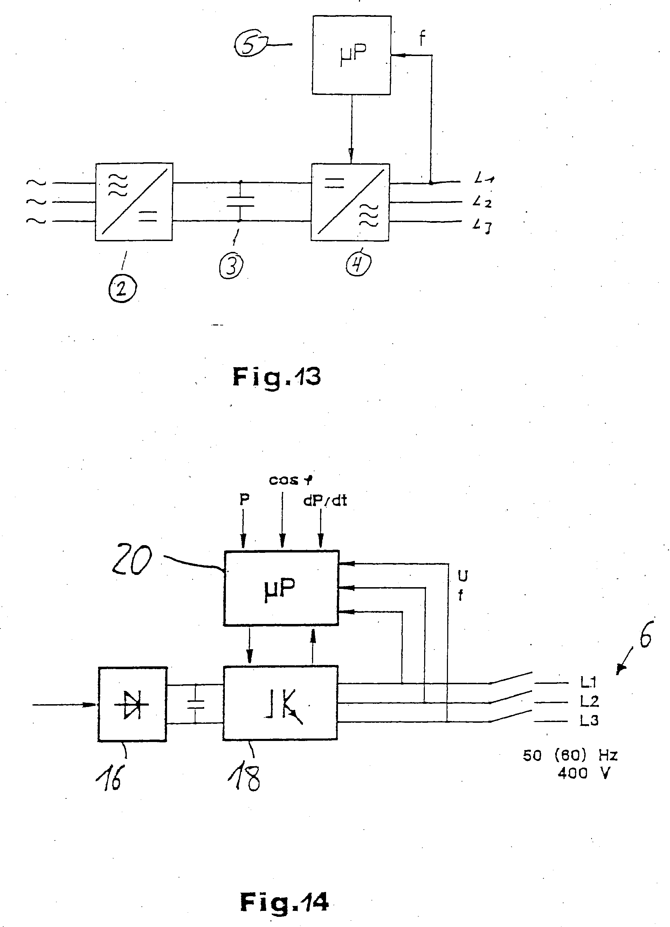

Fig. 13 zeigt ein Ausführungsbeispiel einer Windenergieanlage, die dieser Anforderung gerecht wird. Die Windenergieanlage hat verstellbare Rotorblätter (Pitch-Regelung der Rotorblätter), damit die mechanische Leistung der Windenergieanlage abgeregelt werden kann. Wird beispielsweise der Anstellwinkel der Rotorblätter zum Wind verstellt, kann auch die Kraft auf die Rotorblätter auf einen gewünschten Wert verringert werden. Der elektrische Wechselstrom des Generators (nicht dargestellt), welcher mit dem Rotor, der die Rotorblätter trägt, verbunden ist, wird mittels eines Gleichrichters 2 gleichgerichtet und mittels eines Kondensators 3 geglättet. Der Wechselrichter 4 formt die Gleichspannung dann in einen Wechselstrom um, der an das Netz L₁, L₂, L₃ abgegeben wird. Die Frequenz dieses Ausgangsstromes wird vom Netz vorgegeben. Die Regelungseinrichtung 5, bestehend aus einem Mikroprozessor, misst die Netzfrequenz und steuert die Leistungsschalter des Wechselrichters derart, dass die Ausgangsfrequenz der Netzspannung (Netzfrequenz) entspricht. Steigt die Netzfrequenz - wie oben beschrieben - an, wird die elektrische Leistung - wie in Fig. 11 dargestellt - heruntergeregelt.

Fig. 14 veranschaulicht die erfindungsgemäße Regelungseinrichtung. Der schematisch dargestellte Rotor 4 der Windenergieanlage ist mit einem Generator G gekoppelt, der eine elektrische Leistung bereitstellt, die von der Windgeschwindigkeit und somit der Windleistung abhängt. Die von dem Generator G erzeugte Wechselspannung wird mittels des Wechselrichters zunächst gleichgerichtet und anschließend in eine Wechselspannung umgewandelt, die eine der Netzfrequenz entsprechende Frequenz aufweist. Mit Hilfe des Netzfrequenzaufnehmers wird die Netzspannung am Netzeinspeisungspunkt des Netzes ermittelt. Sobald die Netzfrequenz einen vorbestimmten Wert - siehe Fig. 11 - übersteigt, wird die elektrische abgegebene Leistung reduziert, um einem weiteren Ansteigen der Netzfrequenz entgegenzuwirken. Mit Hilfe der Regelungseinrichtung wird mithin die Netzfrequenz des Netzes auf einen gewünschten Netzfrequenzwert eingeregelt, zumindestens wird ihr weiterer Anstieg vermieden.

Durch eine derartig geregelte Einspeisung der von der Windenergieanlage abgegebenen Leistung können Netzfrequenzschwankungen vermieden bzw. erheblich reduziert werden.

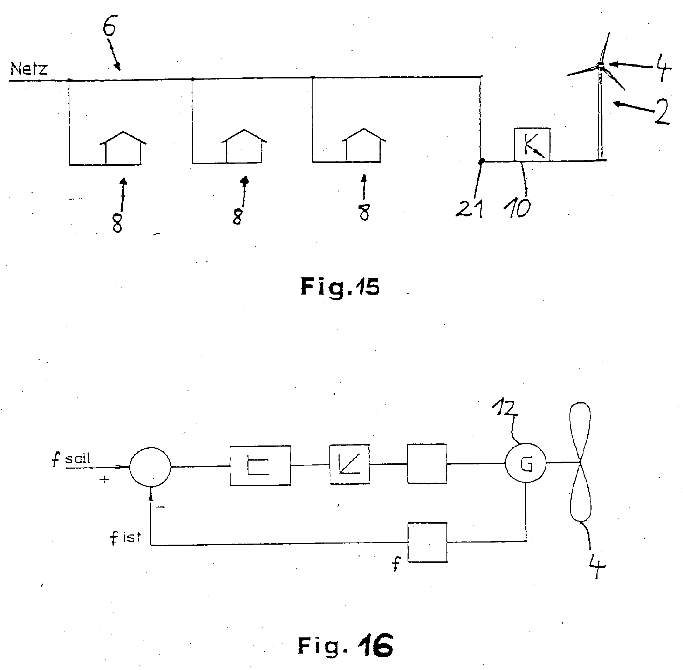

Fig. 15 zeigt die Ankopplung einer Windenergieanlage an ein elektrisches Netz, wobei die von der Windenergieanlage erzeugte elektrische Leistung am Netzeinspeisungspunkt in das Netz abgegeben wird. Am elektrischen Netz hängen mehrere Verbraucher, im dargestellten Beispiel als Häuser skizziert.

Fig. 16 zeigt wesentliche Bestandteile der Steuer-Regelungseinrichtung in etwas anderer Darstellung als in Fig. 3. Die Steuer- und Regelungsanordnung weist einen Gleichrichter auf, in dem die in dem Generator erzeugte Wechselspannung gleichgerichtet wird. Ein mit dem Gleichrichter verbundener Frequenzumrichter wandelt die zunächst im Zwischenkreis gleichgerichtete Gleichspannung in eine Wechselspannung um, die als dreiphasige Wechselspannung über die Leitung L₁, L₂ und L₃ in das Netz eingespeist wird. Der Frequenzumrichter wird mit Hilfe des Mikrocomputers, der Teil der gesamten Regelungseinrichtung ist, gesteuert. Hierzu ist der Mikroprozessor mit dem Frequenzumrichter gekoppelt. Als Eingangsgrößen für die Regelung der Spannung, mit der die von der Windenergieanlage 2 zur Verfügung gestellten elektrischen Leistung in das Netz eingespeist wird, sind die aktuelle Netzspannung, die Netzfrequenz f, die elektrische Leistung P des Generators, der Blindleistungsfaktor cos _ sowie der Leistungsgradient dP/dt verwendet. In dem Mikroprozessor wird die erfindungsgemäße Regelung der einzuspeisenden Spannung mit ihrer gewünschten Netzfrequenz verwirklicht.

Die vorliegende Erfindung betrifft ferner ein Verfahren zum Betreiben eines Windparks mit wenigstens einer Windenergieanlage mit einem von einem Rotor antreibbaren elektrischen Generator zum Abgeben elektrischer Leistung an ein elektrisches Netz und insbesondere an dessen angeschlossene Verbraucher.

Weiterhin betrifft die vorliegende Erfindung eine Windenergieanlage (Windpark), insbesondere zur Durchführung eines solchen Verfahrens, mit einem Rotor und mit einem mit dem Rotor gekoppelten elektrischen Generator zum Abgeben elektrischer Leistung an ein elektrisches Netz, sowie einen Windpark mit wenigstens zwei Windenergieanlagen.

Bei den bekannten Windenergieanlagen zum Erzeugen elektrischer Energie aus Windenergie wird der Generator mit einem elektrischen Verbraucher, häufig einem elektrischen Netz, im Parallelbetrieb betrieben. Während des Betriebs der Windenergieanlage kann die von dem Generator bereitgestellte elektrische Wirkleistung in Abhängigkeit von der aktuellen Windgeschwindigkeit variieren. Dies hat zur Folge, dass auch die Netzspannung (Betrag und/oder Phase), beispielsweise am Einspeisepunkt, in Abhängigkeit von der aktuellen Windgeschwindigkeit veränderlich sein kann. Gleiches gilt auch für den einzuspeisenden Strom.

Im Fall der Einspeisung der erzeugten elektrischen Leistung in ein elektrisches Netz, beispielsweise ein öffentliches Stromnetz, kann es dadurch jedoch zu Schwankungen der Netzspannung kommen. Solche Schwankungen sind jedoch im Interesse eines sicheren Betriebs angeschlossener Verbraucher nur innerhalb sehr enger Grenzen zulässig.

Größere Abweichungen von dem Sollwert der Netzspannung im Versorgungsnetz, insbesondere der Mittelspannungsebene, können zum Beispiel durch Betätigen von Schalteinrichtungen wie Stufentransformatoren ausgeglichen werden, indem diese betätigt werden, wenn vorbestimmte Grenzwerte über- bzw. unterschritten werden. Auf diese Weise wird die Netzspannung innerhalb vorgegebener Toleranzgrenzen im Wesentlichen konstant gehalten.

Die Aufgabe der vorliegenden Erfindung ist es, ein Verfahren zum Betreiben einer Windenergieanlage sowie eine Windenergieanlage bzw. einen Windpark anzugeben, die auch bei schwankender Wirkleistungsabgabe in der Lage sind, die unerwünschten Schwankungen der Spannung an einem vorgegebenen Punkt im Netz im Vergleich zur Situation ohne Windenergieanlage(n) zu reduzieren oder wenigstens nicht signifikant zu erhöhen.

Die Erfindung (Anspruch 15 ff.) löst die Aufgabe bei einem Verfahren der eingangs genannten Art dadurch, dass der Phasenwinkel ϕ der von der/den Windenergieanlagen bereitgestellten elektrischen Leistung in Abhängigkeit von wenigstens einer im Netz erfassten Spannung verändert wird.

Bei einer Windenergieanlage der eingangs genannten Art wird die Aufgabe gelöst durch eine Vorrichtung, die zur Ausführung des erfindungsgemäßen Verfahrens in der Lage ist.

Bei einem Windpark der eingangs genannten Art wird die Aufgabe gelöst durch wenigstens je eine Vorrichtung, die zur Ausführung des erfindungsgemäßen Verfahrens in der Lage ist, und je eine Spannungserfassungseinrichtung, für jeden separat regelbaren Teil des Windparks.

Die Erfindung vermeidet unerwünschte Schwankungen der beim Verbraucher anliegenden Spannung, insbesondere der in einem Netz bestehenden elektrischen Spannung, indem der Phasenwinkel der abgegebenen Leistung in Abhängigkeit von der Spannung des Verbrauchers bzw. des Netzes verändert wird. Dadurch werden unerwünschte Spannungsschwankungen ausgeglichen, die sich aus Änderungen der von der/den Windenergieanlagen abgegebenen Wirkleistung und/oder der dem Netz von den Verbrauchern entnommenen Leistung ergeben.

Besonders bevorzugt wird der Phasenwinkel derart verändert, dass die Spannung an wenigstens einem vorgegebenen Punkt im Netz im Wesentlichen konstant bleibt. Dabei muss zur Gewinnung der erforderlichen Regelgröße die Spannung an wenigstens einem Punkt im Netz erfasst werden.

Insbesondere kann dieser Punkt ein anderer als der Einspeisepunkt sein. Durch diese Erfassung des Betrags der Spannung und durch eine geeignete Änderung des Phasenwinkels der von der/den Windenergieanlagen abgegebenen elektrischen Leistung kann eine reaktionsschnelle und wirksame Regelung geschaffen werden.

In einer insbesondere bevorzugten Ausführungsform werden die für den Phasenwinkel einzustellenden Werte aus vorgegebenen Kennwerten abgeleitet. Diese Kennwerte können bevorzugt in Form einer Tabelle bereitgestellt werden, in welcher eine vorab bestimmte Kennlinienschar in Form diskreter Werte abgebildet ist, die eine Ableitung des einzustellenden Phasenwinkels erlaubt.

In einer bevorzugten Weiterbildung der Erfindung kann die Regelung direkt oder indirekt bewirken, dass, wenn die Spannungsschwankungen die vorgegebenen Grenzwerte überschritten haben, durch das Betätigen einer Schalteinrichtung im Netz, z.B. eines Stufentransformators, die Spannung wieder in den Toleranzbereich gebracht wird. Gleichzeitig bzw. dazu wird der Phasenwinkel für einen vorbestimmten Zeitabschnitt auf einen konstanten Wert- bevorzugt einen Mittelwert, z.B. Null, eingestellt, um in der Folge auftretende Spannungsschwankungen wiederum durch eine geeignete Veränderung des Phasenwinkels ausgleichen zu können.

In einer insbesonders bevorzugten Weiterbildung der Erfindung können in elektrisch getrennten Teilbereichen des Netzes entsprechende Spannungserfassungen und Einstellungen des Phasenwinkels ebenfalls getrennt vorgenommen werden, um jeden Teilbereich derart zu regeln, dass die Spannung in jedem der Teilbereiche im Wesentlichen konstant bleibt.

Die erfindungsgemäße Windenergieanlage wird in vorteilhafter Weise weitergebildet durch eine Regelungseinrichtung, die einen Mikroprozessor aufweist, da auf diese Weise eine digitale Regelung verwirklicht werden kann.

Der eingangs erwähnte Windpark wird bevorzugt weitergebildet, indem je eine Vorrichtung, die zur Ausführung des erfindungsgemäßen Verfahrens in der Lage ist, und je eine Spannungs-Erfassungseinrichtung für jeden separat regelbaren Teil des Windparks vorhanden ist, so dass auch elektrisch getrennte Teilbereiche des Netzes separat derart geregelt werden können, dass die Spannung in jedem Teilbereich des Netzes im Wesentlichen konstant bleibt.

Im Folgenden wird die Erfindung anhand eines Ausführungsbeispiels eines Verfahrens zum Betreiben einer Windenergieanlage unter Bezugnahme auf die Zeichnungen veranschaulicht. Dabei zeigen:

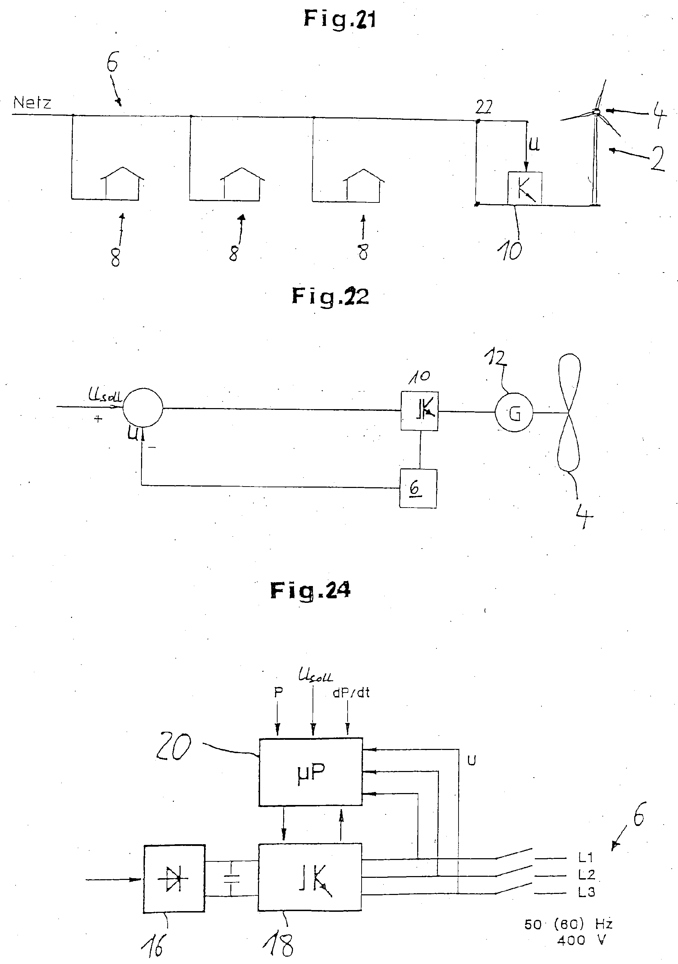

- Figur 21: eine in ein Netz einspeisende Windenergieanlage in einer vereinfachten Darstellung;
- Figur 22: eine erfindungsgemäße Regelungseinrichtung zum Betreiben einer Windenergieanlage;

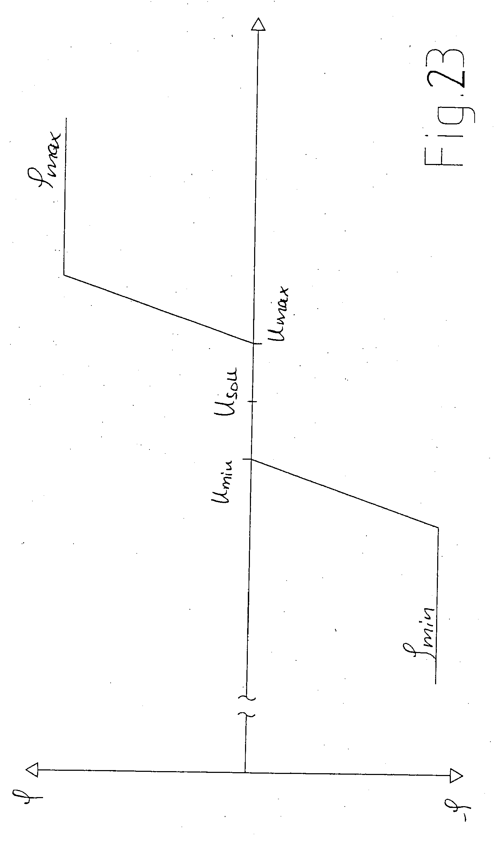

- Figur 23: eine Darstellung, welche den Zusammenhang zwischen Netzspannung und Phasenwinkel veranschaulicht;
- Figur 24: wesentliche Bestandteile der in Figur 22 gezeigten Regelungseinrichtung; und

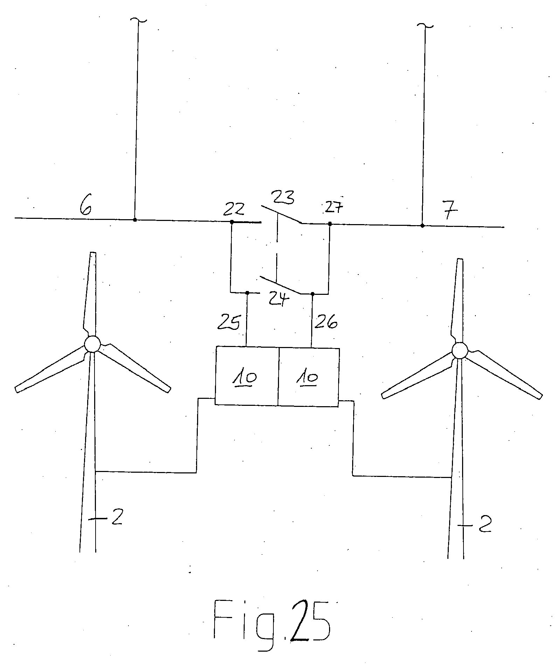

- Figur 25: eine vereinfachte Darstellung einer je nach Netzsituation gemeinsamen oder getrennten Regelung mehrerer Windenergieanlagen.

Eine in Figur 21 schematisch dargestellte Windenergieanlage 2 mit einem Rotor 4 ist mit einem elektrischen Netz 6, das beispielsweise ein öffentliches Netz sein kann, verbunden. An das Netz sind mehrere elektrische Verbraucher 8 angeschlossen. Der in Figur 21 nicht dargestellte elektrische Generator der Windenergieanlage 2 ist mit einer elektrischen Steuerungs- und Regelungsvorrichtung 10 gekoppelt, die den in dem Generator erzeugten Wechselstrom zunächst gleichrichtet und anschließend in einen Wechselstrom mit einer Frequenz umwandelt, die der Netzfrequenz entspricht. Die Steuerungs- und Regelungsvorrichtung 10 weist eine erfindungsgemäße Regelungseinrichtung auf.

An einem beliebigen Punkt 22 im Netz 6 kann eine Spannungserfassungseinrichtung 22 vorgesehen sein, die (neben der Phase) insbesondere den Betrag der Netzspannung misst und den gemessenen Wert als eine entsprechende Regelgröße zu der Regelungsvorrichtung 10 zurückgibt.

Figur 22 veranschaulicht die erfindungsgemäße Regelungseinrichtung. Der schematisch dargestellte Rotor 4 ist mit einem Generator 12 gekoppelt; der eine elektrische Leistung bereitstellt, die von der Windgeschwindigkeit abhängen kann. Die in dem Generator 12 erzeugte Wechselspannung kann zunächst gleichgerichtet und anschließend in eine Wechselspannung umgewandelt werden, die eine der Netzfrequenz entsprechende Frequenz aufweist.

Mit Hilfe eines Spannungsaufnehmers (nicht dargestellt) wird die Netzspannung an einem Ort 22 in dem Netz 6 gemessen. In Abhängigkeit von der ermittelten Netzspannung wird - ggf. mit Hilfe eines in Figur 4 dargestellten Microprozessors - ein optimaler Phasenwinkel ϕ berechnet. Mit Hilfe der Regelungseinrichtung wird dann die Netzspannung U auf den gewünschten Wert Uₛₒₗₗ eingeregelt. Durch die Veränderung des Phasenwinkels wird die von dem Generator 12 an das Netz 6 abgegebene elektrische Leistung geregelt.

Die in Figur 23 gezeigte Darstellung veranschaulicht den Zusammenhang zwischen der Spannung im Netz und dem Phasenwinkel. Weicht die Spannung von ihrem Sollwert Uₛₒₗₗ ab, der zwischen den Spannungswert Uₘᵢₙ und Uₘₐₓ liegt, wird entsprechend der Kennlinie in dem Diagramm der Phasenwinkel ϕ derart verändert, dass abhängig von dem Vorzeichen der Abweichung entweder induktive oder kapazitive Blindleistung eingespeist wird, um auf diese Weise die Spannung an dem Spannungserfassungspunkt (22 in Figur 21) zu stabilisieren.

Figur 24 zeigt wesentliche Bestandteile der Steuerungs- und Regelungsvorrichtung 10 aus Figur 21. Die Steuerungs- und Regelungsvorrichtung 10 weist einen Gleichrichter 16 auf, in dem der in dem Generator erzeugte Wechselstrom gleichgerichtet wird. Ein mit dem Gleichrichter 16 verbundener Frequenzumrichter 18 wandelt den zunächst gleichgerichteten Gleichstrom in einen Wechselstrom um, der als dreiphasiger Wechselstrom über die Leitungen L1, L2 und L3 in das Netz 6 eingespeist wird.

Der Frequenzumrichter 18 wird mit Hilfe eines Mikrocomputers 20, der Teil der gesamten Regelungseinrichtung ist, gesteuert. Hierzu ist der Mikroprozessor 20 mit dem Frequenzumrichter 18 gekoppelt. Als Eingangsgrößen des Mikroprozessors 20 sind die aktuelle Netzspannung U, die elektrische Leistung P des Generators, der Sollwert der Netzspannung Uₛₒₗₗ sowie der Leistungsgradient dP/dt vorgesehen. In dem Mikroprozessor 20 wird die erfindungsgemäße Veränderung der einzuspeisenden Leistung verwirklicht.

In Figur 25 sind als Beispiel für einen Windpark zwei Windenergieanlagen 2 dargestellt. Jeder dieser Windenergieanlagen 2, die symbolisch natürlich auch jeweils für eine Mehrzahl von Windenergieanlagen stehen können, ist eine Regelungsvorrichtung 10 zugeordnet. Die Regelungsvorrichtung 10 erfasst an vorgegebenen Punkten 22, 27 in dem Netz 6, 7 die Spannung und überträgt diese über Leitungen 25, 26 zu der jeweils zugeordneten Regelungsvorrichtung 10.

Die Teilbereiche 6, 7 des Netzes können über eine Schalteinrichtung 23 miteinander verbunden oder voneinander getrennt werden. Parallel zu dieser Schalteinrichtung 23 ist eine Schalteinrichtung 24 vorgesehen, welche es gestattet, die beiden Regelungsvorrichtungen 10 entsprechend dem Schaltzustand der Schalteinrichtung 23 miteinander zu verbinden oder voneinander zu trennen.

Sind also die beiden Teilbereiche 6, 7 des Netzes miteinander verbunden, werden auch die beiden Regelungsvorrichtungen 10 miteinander verbunden, so dass das gesamte Netz als eine Einheit betrachtet und durch den gesamten Windpark als eine Einheit gespeist wird, wobei der Windpark wiederum in Abhängigkeit von der Spannung am Erfassungspunkt 22, 27 einheitlich geregelt wird.

Werden die beiden Teilbereiche 6, 7 durch die Schalteinrichtung 23 getrennt, werden auch die Regelungsvorrichtungen 10 derart voneinander getrennt, dass ein Teil des Windparks von einem Erfassungspunkt 22 über eine Leitung 25 von der Regelungseinrichtung 10 überwacht wird und entsprechend der zugeordnete Teil des Windparks geregelt werden kann, während der andere Teilbereich des Netzes 7 von einem Erfassungspunkt 27 über eine Leitung 26 durch die Regelung 10 überwacht wird, welche den anderen Teil des Windparks entsprechend regelt, um die Spannung in dem Teilbereich des Netzes 7 zu stabilisieren.

Natürlich muß diese Aufteilung nicht auf zwei Teilbereiche beschränkt sein. Diese Aufteilung kann bis zu einer Zuordnung einer einzelnen Anlage zu einem Teilbereich des Netzes aufgelöst werden.

Die erfindungsgemäße zentrale Regelung eines Windparks stellt im Wesentlichen darauf ab, dass der Windpark nicht nur elektrische Energie in einen öffentliches Versorgungsnetz einspeist, sondern auch gleichzeitig netzunterstützend gesteuert wird, bevorzugt vom Betreiber des öffentlichen Netzes (EVU). Soweit von einem Windpark in der vorliegenden Anmeldung die Rede ist, ist hiermit auch eine einzelne Windenergieanlage gemeint und nicht nur stets eine Mehrzahl von Windenergieanlagen, wobei bevorzugt gerade eine Mehrzahl von Windenergieanlagen stets einen Windpark bildet.

Für die erfindungsgemäße zentrale Steuerung des Windparks hat der Betreiber des öffentlichen Versorgungsnetzes nicht nur einen Steuerzugriff mittels einer entsprechenden Steuerleitung (Bussystem) zum Windpark / zur Windenergieanlage, sondern erhält auch vom Windpark/Windenergienanlage Daten, wie beispielsweise gemessene Winddaten, Daten über den Status des Windparks, auch z. B. Daten über die verfügbare Leistung (aktuelle Leistung (Wirkleistung)) des Windparks.

Eine solche zentrale Steuerung kann beispielsweise auch bedeuten, dass der Windpark gänzlich bei bestimmten Fällen vom Netz genommen wird, z. B. dann, wenn seitens des Windparks die vom Betreiber des öffentlichen Versorgungsnetzes vorgegebenen Netzanschlussregeln nicht eingehalten werden können.

Wenn beispielsweise die Spannung im Netz unter einen bestimmten vorgegebenen Wert sinkt, beispielsweise auf einen Wert von 70 bis 90 % der Netzspannung, muss der Windpark innerhalb einer vorgegebenen Zeit, z. B. zwischen zwei und sechs Sekunden, vom Netz getrennt werden.

Schließlich muss dafür Sorge getragen werden, dass die Leistungsänderung (dP) des Windparks nicht nur vom Wind vorgegeben wird, sondern sich in ganzen bestimmten Zeitabständen auch noch ändern kann. Diese Leistungsgröße wird daher auch Leistungsgradient genannt und gibt an, um wie viel Prozent die jeweilige verfügbare Leistung innerhalb einer vorbestimmten Zeit (z. B. pro Minute) sich ändern darf. So kann beispielsweise vorgesehen sein, dass der Leistungsgradient des Windparks maximal 5 bis 15 %, vorzugsweise 10 % der Netzanschlusskapazität pro Minute betragen darf.

Eine solche Regelung des Windparks kann beispielsweise dadurch erfolgen, dass sämtliche Windenergieanlagen eines Parks gleichzeitig bzw. gleichförmig ihre Leistungsabgabe in dem vorbestimmten Leistungsgradienten steigern. Alternativ ist natürlich auch vorstellbar, dass bei einem Windpark von beispielsweise 10 bis 20 Anlagen zunächst einmal ein oder zwei Anlagen (jeweils in der Größenordnung des Leistungsgradienten) zunächst mit voller Leistung einspeisen und dann je nach vorgegebenem Leistungsgradienten weitere Anlagen innerhalb einer vorbestimmten Zeit zugeschaltet werden, bis die gesamte verfügbare Leistung des Windparks eingespeist werden kann.

Ein weiterer Aspekt der erfindungsgemäßen Windparkregelung ist die Bereitstellung der Reserveleistung in Höhe von einem Prozentsatz, z.B. 10% von der aktuell verfügbaren Leistung des Windparks oder einer festen Größe, z.B. von 500 kW bis 1 MW oder mehr pro Windpark. Diese Reserveleistung ist nicht zu verwechseln mit einer Parkleistung, die die Netzanschlussleistung des Windparks überschreitet. Bei der Reserveleistung geht es maßgeblich um eine Leistungsreserve (diese betrifft sowohl die Wirkleistung als auch die Blindleistung) die sie im Bereich der Netzanschlussleistung nicht überschreitet. Diese Reserveleistung kann vom Betreiber des öffentlichen Versorgungsnetzes vorgeschrieben werden. Das heißt, wenn also ausreichend Wind zur Verfügung steht, um die Netzanschlussleistung vom Windpark in das Netz einzuspeisen, kann das EVU durch den vorbeschriebenen Steuerungseingriff in den Windpark dafür sorgen, dass diese theoretisch mögliche Leistung nicht vollständig eingespeist wird, sondern ein Teil dieser Leistung als Reserveleistung verfügbar bleibt. Besonderer Aspekt dieser Reserveleistung ist, dass beim unerwarteten Ausfall von Kraftwerksleistung (an anderen Stellen der Netzeinspeisung) über den Abruf der entsprechenden Reserveleistung das Netz stabilisiert werden kann.

Mithin ist bei der vorgenannten zentralen Steuerung des Windparks die eingespeiste Leistung im Normalfall also geringer als die vom Windpark zur Verfügung zu stellende Leistung (maximale verfügbare Leistung) abhängig vom jeweiligen Leistungsbedarf im Netz.

Damit diese vorbeschriebene Leistungssteuerung erfolgen kann, benötigt der Netzbetreiber auch die vorbeschriebenen Daten, wie Windgeschwindigkeit, Anlagenstatus des Windparks (wie viel Anlagen sind im Betrieb, wie viel sind ausgefallen oder gestört) und bevorzugt auch die maximal mögliche Wirkleistungsabgabe. Dabei kann für die maximal mögliche Wirkleistungsabgabe die Einschränkung gelten, dass diese nur dann als Daten bereitgestellt werden muss, wenn sie sich nicht aus der Windgeschwindigkeit und dem Anlagenstatus bestimmen lässt.

Für die Steuerung des Windparks sowie auch für die Datenversorgung der EVU kommt eine normales Bussystem, z. B. auch ein standardisiertes Bussystem in Frage. Für solche standardisierten Bussysteme, beispielsweise ein Profibussystem, gibt es bereits standardisierte Schnittstellen, so dass mittels entsprechend standardisierter Steuerbefehle auch die zentrale Windparksteuerung vorgenommen werden kann.

Ergänzend zu Vorstehendem kann auch vorgesehen werden, dass der Windpark ab einer vorausgelegten Leistung, z. B. bei einer gesamten Leistung von mehr als 50 MW wie ein Großkraftwerk behandelt wird und dann auch die Bedingung für Großkraftwerke erfüllen muss.

Schließlich kann auch vorgesehen werden, dass der Windpark so geregelt wird, dass der Netzanschlusswert (die Netzanschlusskapazität) nicht überschritten wird.

Schließlich muss auch beim Zuschalten/Einschalten des Windparks dafür gesorgt werden, dass nicht unerwünschte Netzrückwirkungen auftreten. Z. B. darf Strom beim Zuschalten/Einschalten eines Windparks nicht größer sein, als ein vorbestimmter Wert des Nennstroms, der der Anschlusskapazität entspricht. Ein solcher Wert kann beispielsweise im Bereich von 1,0 bis 1,4 liegen.

Steigt die Frequenz im öffentlichen Versorgungsnetz an, so sollte dafür - wie bereits beschrieben - dafür gesorgt werden, dass ab einem bestimmten Frequenzwert, z. B. ab 50,25 Hz (bei 50 Hz Nennfrequenz) die abgegebene Wirkleistung des Windparks so lange automatisch reduziert wird, bis sich die Netzfrequenz wieder auf einen vorbeschriebenen Wert stabilisiert.

Daher muss der Windpark auch stets mit einer reduzierten Leistungsabgabe betrieben werden können, um die Netzvorgaben einhalten zu können. Diese Parkregelung bedeutet auch, dass die Leistungsabgabe (insbesondere Wirkleistung) bei jedem Betriebszustand und aus jedem Betriebspunkt auf jeden beliebigen Wert reduziert werden kann.

So kann beispielsweise eine Begrenzung der Einspeiseleistung unterhalb der verfügbaren Einspeiseleistung vorgenommen werden, wenn Gefahren für eine sicheren Systembetrieb bestehen, Engpässe bzw. Gefahr von Überlastung in vorgelagerten Netzen zu besorgen sind, die Gefahr der Bildung eines Inselnetzes besteht, die statischen oder dynamischen Netzstabilitäten gefährdet sind, der Frequenzanstieg das gesamte Netzsystem gefährden kann und beispielsweise auch am EVU Reparaturarbeiten oder sonstige betriebsbedingte Stilllegungen erfolgen müssen.

Neben der bereits beschriebenen im Bedarfsfall einzustellenden Wirkleistungsabgabe muss auch eine bestimmte Blindleistung zur Verfügung gestellt werden können, wobei sich diese auch auf Wunsch des EVUs einstellen lässt und zwar sowohl im induktiven als auch im kapazitiven Bereich, also untererregt und übererregt, wobei hierzu die jeweiligen Werte vom EVU vorgegeben werden können.

Der Sollwert der Blindleistungsbereitstellung kann hierbei variabel eingestellt werden, wobei die Sollwertvorgabe am Netzanschlussknoten für den Leistungsfaktor (cos phi) oder einen Spannungsbetrag erfolgt. Auch kann ein fester Sollwert vorgegeben sein.

Wie bereits vorbeschrieben, wird die Leistungsabgabe reduziert und/oder der Windpark völlig vom Netz genommen, wenn bestimmte Frequenzwerte im Netz überunterschritten werden. So kann beispielsweise von einer Abnahme des Windparks vom Netz bei Unterschreiten einer Netzfrequenz von etwa 48Hz (bei 50 Hz Netzfrequenz) oder bei 51 bis 52 Hz vorgesehen sein. Bei Werten unterhalb des vorgesehenen Intervalls kann hierbei noch in Grenzen des Intervalls auch vorgesehen sein, dass nur ein Teil der verfügbaren aktuellen Leistung eingespeist wird, beispielsweise etwa 80 bis 95 % der verfügbaren aktuellen Leistung.

Sollte etwa auch die Netzspannung unter einen vorbestimmten Wert fallen, so gilt das Gleiche wie bei der abweichenden Netzfrequenz auch hier. Das heißt, dass bei Unterschreiten oder Überschreiten einer vorbestimmten Netzspannung im bestimmten Wert zunächst einmal eine reduzierte Leistungsabgabe erfolgt und bei Unter- bzw. Überschreiten bestimmter Grenzwerte der Netzspannung die Anlagen völlig vom Netz genommen werden oder zumindest die eingespeiste Leistung auf Null gesetzt wird.

Schließlich kann auch vorgesehen sein, dass bei Erreichen bestimmter Netzspannungs- und/oder Netzfrequenzwerte eine erprobte Abschaltung des Windparks erfolgt, ohne dass zuvor eine bereits erniedrigte Leistungsabgabe erfolgt.

Das bedeutet aber auch gleichzeitig, dass bei bestimmten Frequenzabweichungen/Spannungsabweichungen innerhalb eines vorbestimmten Bereichs um die Netzfrequenz/Netzspannung herum eine automatische Trennung des Windparks vom Netz nicht zulässig ist.

Schließlich kann zum Netzschutz auch vorgesehen sein, dass die Abschaltzeit bei Spannungsübersteigung deutlich kürzer ist (z. B. zwischen 50 und 200 Millisekunden), als bei Spannungsrückgangsschutz (Abschaltzeit von mehr als 1 Sekunde, vorzugsweise etwa 2 bis 6 Sekunden). Die Abschaltzeit bei Über- oder Unterschreiten des vorbestimmten noch gerade zulässigen Grenzwertes der Oberfrequenz oder Unterfrequenz liegt hierbei etwa im Bereich der Abschaltzeit bei Spannungsübersteigung (über einen vorbestimmten Spannungswert).

Schließlich sollte bei einer Störung im Netz, beispielsweise bei einem Kurzschluss, nicht immer gleich eine automatische Trennung des Windparks vom Netz erfolgen, sondern auch der Windpark sich so steuern lassen, dass er je nach Netzanschluss noch einen Beitrag zur Kurzschlussleistung als Scheinleistung in das Netz einspeist, um somit noch in gewisser Weise eine Netzstützung vornehmen zu können. Das bedeutet, dass der Windpark zumindest für eine gewisse Zeit für die Dauer eines Kurzschlusses, maximal jedoch nur einige wenige Sekunden, den größtmöglichen Scheinstrom (Scheinleistung) zu liefern hat, der jedoch dem beispielsweise einfachen oder bis zum 1,5-fachen des Stromes beträgt, der der Netzanschlusskapazität entspricht.

Vorbeschriebenes Verhalten kann auch von der Höhe der Nennspannung abhängig gemacht werden, beispielsweise, wenn diese eine vorbestimmten Wert von beispielsweise mehr als 50 kV übersteigt.

Damit die vorbeschriebenen Abschaltungen rechtzeitig erfolgen können, ist zu deren Realisierung am Netzanschlussknoten z. B. ein Schutzrelais (Distanzschutzrelais) zu installieren.

Schließlich sollten auch Mittel vorgesehen sein, die bei Anfahren eines Windparks die Spannung im Netz und die des Windparks synchronisieren, weil asynchrone Spannungen beim Wiederanfahren des Windparks das Netz empfindlich stören und zum Ausschalten bringen können.

Soweit gemäß der vorliegenden Anmeldung die Leistung unterhalb eines Wertes der aktuell von einem Windpark zur Verfügung zu stellenden Leistung geregelt wird, kann dies durch verschiedene Maßnahmen realisiert werden.

So kann beispielsweise die Leistung insgesamt für jede einzelne Anlage herabgesetzt werden, damit der gesamte Windpark den gewünschten reduzierten Leistungswert annimmt. Alternativ dazu kann aber auch vorgesehen werden, dass nur einzelne Anlagen hinsichtlich ihres Leistungseinspeisewertes reduziert werden, so dass der gesamte Einspeiseleistungswert des Windparks den gewünschten Wert wiederum annimmt.

Schließlich kann auch vorgesehen werden, dass beispielsweise bestimmte vom Windpark zur Verfügung gestellte Leistung in sog. Dumploads (Widerständen) oder anderen Energiespeichern zwischengespeichert oder in Wärme oder in andere Energieform umgesetzt wird, dass der Einspeisewert des Windparks den gewünschten Wert annimmt.

Auch kann die Leistungsverminderung dadurch bereitgestellt werden, dass eine oder bestimmte Windenergieanlagen gänzlich vom Netz abgenommen werden, so dass sich dann wiederum die gesamte Leistung des Windparks (insbesondere die Wirkleistung) auf den gewünschten Wert einstellen kann und/oder unter den gewünschten Wert fällt.

Zur Datenübertragung der Daten des Windparks (Winddaten, Statusdaten, Leistungsdaten etc.) bzw. zur Steuerung des Windparks kann auch eine drahtlose Kommunikationseinrichtung vorgesehen sein, so dass die Steuerungsdaten bzw. Informationsdaten drahtlos übertragen und verarbeitet werden können.

Bei der vorgenannten Windparkregelung ist auch vorzusehen, dass innerhalb des Windparks auch der Wert ermittelt wird, der als maximale Energie zur Verfügung gestellt werden kann und ferner wird dann auch ermittelt, welcher Energiebetrag in das Netz eingespeist wird, so dass aus dem Differenzbetrag, der im Wesentlichen auf die Steuerung des Windparks seitens der EVU zurückgeht, ein Einspeisevergütungsbetrag errechnet werden kann, der bedarfsweise erstattet wird.

Wie bereits beschrieben, ist es nicht nur möglich, dass das Energieversorgungsunternehmen, welches das Versorgungsnetz betreibt, die Möglichkeit hat, die Leistung des Windparks oder einzelner Windenergieanlagen mit dem Zugriff über eine Steuerleitung aus verschiedenen Überlegungen (Netzschutz, Servoleistung) zu begrenzen bzw. zu beschränken, sondern es ist auch möglich, dass gleichzeitig der Betreiber des öffentlichen Versorgungsnetzes Daten über den Status des Windparks, z.B. Daten über die maximal verfügbare Leistung, Windgeschwindigkeit usw. erhält. Da bei einer Beschränkung der Leistung unterhalb der aktuell verfügbaren Leistung der Windpark bzw. die Windenergieanlagen eines Windparks nicht optimal ausgenutzt werden, führt dies zu Einspeiseverlusten der Windenergieanlagenbetreiber. Es wird daher erfindungsgemäß hier auch vorgeschlagen, einen virtuellen Stromzähler vorzusehen, welcher die Differenz dessen erfasst, was durch den Eingriff seitens des Versorgungsunternehmens in die Regelung und damit die Beschränkung der Windpark- bzw. der Windenergieanlagenleistung nicht abgenommen wird. Ein solcher "virtueller Stromzähler" kann einerseits aus der Windgeschwindigkeit die zur Verfügung zu stellende Leistung ermitteln, und wenn gleichzeitig das Energieversorgungsunternehmen oder jemand anders die Leistung einzelner Windenergieanlagen oder eines gesamten Windparks unterhalb der Leistung herunterregelt, die zur Verfügung gestellt werden kann, kann durch eine Integration die Energiemenge ermittelt (gezählt) werden, die nicht in das Netz eingespeist wird. Durch den virtuellen Stromzähler wird ermöglicht, dass der Betreiber der Windenergieanlage auch für den "virtuellen Strom", also den Strom, der aufgrund der Eingriffe in die Regelung der Energieversorgung nicht eingespeist wird, Vergütung erhalten kann. Der "virtuelle Stromzähler" kann sowohl beim Betreiber der Windenergieanlage, in den Windenergieanlagen selbst innerhalb des Windparks, beim Energieversorgungsunternehmen oder auch beim Hersteller der Windenergieanlagen installiert sein.

Soweit in der vorliegenden Anmeldung der Begriff Windenergieanlage verwendet wird, so ist dieser synonym mit dem Begriff Windpark. Soweit in der vorliegenden Anmeldung verschiedene Erfindungsaspekte beschrieben sind, können diese zusammen mit den Windenergieanlagen bzw. deren Steuerung realisiert werden. Es ist aber auch möglich, die unterschiedlichen erfindungsgemäßen Ansätze singulär ohne die weiteren Erfindungsaspekte zu realisieren und zu beanspruchen, auch wenn in der vorliegenden Anmeldung verschiedene Erfindungsaspekte regelmäßig zusammen beschrieben sind. Dem Fachmann ist aber klar, dass verschiedene Erfindungsaspekte auch unterschiedlich realisiert und beansprucht werden können und deren gemeinsame Beschreibung nicht gleichbedeutend damit ist, dass diese aus stets zusammen realisiert und beansprucht werden müssen.

## Patentansprüche

1. Verfahren zum Betrieb eines Windparks, bestehend aus mehreren Windenergieanlagen,
wobei der Windpark an ein elektrisches Versorgungsnetz angeschlossen ist, in welches die von dem Windpark erzeugte elektrische Leistung eingespeist wird und der Windpark und/oder wenigstens eine der Windenergieanlagen des Windparks über einen Steuereingang verfügt, mittels dem die elektrische Leistung des Windparks bzw. einer oder mehrerer einzelner Windenergieanlagen in einem Bereich von 0 % bis 100 % der jeweiligen zur Verfügung zu stellenden Leistung eingestellt werden kann und dass eine Datenverarbeitungseinrichtung vorgesehen ist, welche mit dem Steuereingang verbunden ist und mittels welcher der Stellwert im Bereich von 0 bis 100% eingestellt wird, je nachdem wie groß die Leistung ist, die der gesamte Windpark an seinem Ausgang für die Einspeisung in das Versorgungsnetz zur Verfügung stellt und
wobei der Betreiber (EVU) das elektrische Versorgungsnetz zur Verfügung stellt und
wobei der Betreiber (EVU) des elektrischen Versorgungsnetzes, an dem der Windpark angeschlossen ist, die vom Windpark abgegebene Leistung über dem Steuereingang einstellen kann und zwar derart, dass eine Reserveleistung in Höhe eines Prozentsatzes, zum Beispiel 10 % von der aktuell verfügbaren Leistung des Windparks, oder einer festen Größe, zum Beispiel 500 kW bis 1 MW oder mehr pro Windpark bereitgestellt wird, was zur Folge hat, dass wenn ausreichend Wind zur Verfügung steht, um die Netzanschlussleistung vom Windpark in das Netz einzuspeisen, das Versorgungsunternehmens (EVU) durch den Steuereingriff dafür sorgt, dass die theoretisch mögliche Leistung nicht vollständig eingespeist wird, sondern ein Teil dieser Leistung als Reserveleistung verfügbar bleibt und dass bei einem Ausfall von Kraftwerksleistung an anderen Stellen im Netz über den Abruf der entsprechenden Reserveleistung das Versorgungsnetz stabilisiert wird.

2. Verfahren nach Anspruch 1,
**dadurch gekennzeichnet, dass** die eingespeiste Leistung im Normalfall geringer ist, als die vom Windpark zur Verfügung zu stellende Leistung, also die aufgrund der Windverhältnisse maximal verfügbare Leistung, abhängig vom jeweiligen Leistungsbedarf im Netz.

3. Verfahren nach einem der vorherigen Ansprüche,
**dadurch gekennzeichnet, dass** der Betreiber (EVU) des elektrischen Versorgungsnetzes Daten über die Windgeschwindigkeit, Anlagenstatus des Windparks, zum Beispiel wie viele Anlagen sind im Betrieb, wie viel sind ausgefallen oder gestört, erhält.

4. Verfahren nach einem der vorherigen Ansprüche,
**dadurch gekennzeichnet, dass** für die Steuerung des Windparks, sowie auch für die Datenversorgung des Betreibers (EVU) des elektrischen Versorgungsnetzes ein Bussystem vorgesehen ist, vorzugsweise ein standardisiertes Bussystem, sodass mittels standardisierter Steuerbefehle auch die Windparksteuerung vorgenommen werden kann.

5. Verfahren nach einem der vorherigen Ansprüche,
**dadurch gekennzeichnet, dass** eine Begrenzung der Einspeiseleistung des Windparks unterhalb der verfügbaren Einspeiseleistung vorgenommen wird, wenn Gefahren für einen sicheren Systembetrieb bestehen, Engpässe bzw. Gefahr von Überlastung in vorgelagerten Netzen zu besorgen ist, die Gefahr der Bildung eines Inselnetzes besteht, die statischen oder dynamischen Netzstabilitäten gefährdet sind, der Frequenzanstieg das gesamte Netzsystem gefährden kann und beispielsweise auch am Versorgungsnetz Reparaturarbeiten oder betriebsbedingte Stilllegungen erfolgen.

6. Verfahren nach einem der vorherigen Ansprüche,
**dadurch gekennzeichnet, dass** neben der im Bedarfsfall einzustellende Windleistungsabgabe auch eine bestimmte Blindleistung zur Verfügung gestellt werden kann,
wobei sich diese auf Wunsch des Betreibers (EVU) des elektrischen Versorgungsnetzes einstellen lässt und zwar sowohl im induktiven als auch im kapazitiven Bereich, also unterregt und überregt,
wobei hierzu die jeweiligen Werte vom Betreiber (EVU) zum elektrischen Versorgungsnetzes vorgegeben werden.

7. Verfahren nach einem der vorherigen Ansprüche,
**dadurch gekennzeichnet, dass** bei einem Netzkurzschluss nicht immer gleich eine automatische Trennung des Windparks vom Netz erfolgt, sondern der Windpark sich so steuern lässt, dass je nach Netzanschluss noch einen Beitrag zur Kurzschlussleistung als Scheinleistung in das Netz eingespeist wird, um somit noch eine Netzstützung vorzunehmen,
wobei in einem solchen Fall der Windpark für eine gewisse Zeit, für die Dauer eines Kurzschlusses, maximal nur einige wenige Sekunden, den größtmöglichen Scheinstrom (Scheinleistung) liefert, der dem einfachen oder bis zu 1,5-fachen des Stromes beträgt, der der Netzanschlusskapazität entspricht.

8. Virtueller Stromzähler einer Windenergieanlage oder eines Windparks,
wobei der Stromzähler die Differenz dessen erfasst, was durch den Eingriff seitens eines Versorgungsunternehmens in die Regelung einer Windenergieanlage und/oder des Windparks und damit der Beschränkung der Windpark- bzw. Windenergieanlagenleistung nicht vom Versorgungsnetz abgenommen wird.

9. Virtueller Stromzähler nach Anspruch 8,
**dadurch gekennzeichnet, dass** der Stromzähler einerseits aus der Windgeschwindigkeit die von der Windenergieanlage oder dem Windpark zur Verfügung zu stellende Leistung ermittelt, wenn das Versorgungsunternehmen oder jmd. anderes die Leistung der Windenergieanlage oder des Windparks unterhalb der Leistung, die aufgrund der Windgeschwindigkeit zur Verfügung gestellt werden kann, herunter regelt, durch Integration die Energiemenge ermittelt wird, welche nicht in das Netz eingespeist wird.

10. Virtueller Stromzähler nach Anspruch 8 oder 9,
**dadurch gekennzeichnet, dass** die Windenergieanlage oder Windpark über einen Steuereingang verfügt, mittels dem die elektrische Leistung des Windparks bzw. einer oder mehrerer einzelner Windenergieanlagen in einem Bereich von 0 % bis 100 % der jeweiligen zur Verfügung zu stellenden Leistung, insbesondere Nennleistung, eingestellt werden kann und dass eine Datenverarbeitungseinrichtung vorgesehen ist, welche mit dem Steuereingang verbunden ist und mittels welcher der Stellwert im Bereich von 0 bis 100% eingestellt wird, je nachdem, wie groß die Leistung ist, die der gesamte Windpark an seinem Ausgang für die Einspeisung in das Energienetz zur Verfügung stellt und
wobei der Betreiber (EVU) des elektrischen Versorgungsnetzes, an dem der Windpark bzw. die Windenergieanlage angeschlossen ist, die vom Windpark bzw. der Windenergieanlage abgegebene Leistung über den Steuereingang einstellen kann.
